# EUROPEAN PATENT SPECIFICATION

(11) **EP 1 829 670 B1**
(45) Date of publication and mention of the grant of the patent: **17.12.2008**
(21) Application number: 07380056.7
(22) Date of filing: 01.03.2007
(51) Int. Cl.: B29D 23/20, B29C 47/02, B65D 35/08, B29C 69/00

(54) **Procedure for manufacturing decorated tubes by means of a process combining extrusion and spray decoration**
Verfahren zur Herstellung dekorierter Rohre durch in einem Prozess kombinierte Extrusion und Sprühdekoration
Procédure pour la fabrication de tubes décorés au moyen d'un procédé qui combine l'extrusion et la décoration par pulvérisation

(30) Priority: 02.03.2006 ES 200600510
(43) Date of publication of application: 05.09.2007
(73) Proprietor: Tuboplast Hispania, S.A., Miñano Mayor (ES)
(72) Inventor: Fernandez de Mendiola Quintana, Javier, 01008 Vitoria-Gasteiz (ES); Lopez de Murga Ochoa, Jesus, 01010 Vitoria-Gasteiz (ES)
(74) Representative: Urteaga Simarro, José Antonio

(56) References cited:
- US-A- 5 800 770

## Description

### Technical field

The invention relates to a procedure for manufacturing flexible tubes used to store cosmetics, creams or other products and which are formed by a body provided with various decorative elements.

### State of the art

There are currently as known from e.g. US-A-5,800,770 diverse procedures for manufacturing tubes of flexible raw materials provided with decoration. Among said procedures, a very widespread procedure is that in which in an initial extrusion process a continuous tube of a flexible material is manufactured, where the tube can be coloured if the material used in the extrusion is provided with suitable colouring. The continuous tube generated by the extrusion is then cut into portions of a specific length which constitute the so-called "skirt" of the tube that is to be obtained. Subsequently, by means of an appropriate process (generally an overmoulding process) one end of the skirt is provided with a covering known as a "head". The head is the end of the tube through which, during the useful life of the tube, the product housed inside the tube is extracted. Normally, a cap is screwed onto the head. Subsequently, the product that will finally be contained in the tube is inserted into the interior of the tube by the free end that is in the area of the skirt opposite the head, and finally said free end is closed and sealed.

The options for decorating the tube involve colouring the material used in extrusion, and the application of more traditional methods such as offset printing, silk-screen printing, stamping and others, by means of which it is possible to add decorative elements such as texts or images. These methods can be applied, individually or combined, in different sequences and at different points of the tube manufacturing procedure (no head, with head, no cap, or with cap).

Both the colouring that can be obtained in the skirt manufactured by extrusion and the complete decoration by means of offset printing present limited aesthetic effects. For this reason, in some applications, the process for manufacture of the skirt by extrusion and subsequent cutting may be followed by a process of decoration of the tube by spray paint. This additional process is normally carried out on the tube composed of the skirt and head. As in the previous case, other decorative elements may optionally be added by means of offset printing, silk-screen printing, stamping, etc.

This manufacturing procedure (extruding a continuous tube, cutting the continuous tube to obtain a skirt, injecting the head of the tube, spraying and, optionally, performing other processes for adding decorative elements) may lead to the appearance of certain problems at the two ends of the tube. For example, marks and loosening may appear in the shoulder (area of transition between the head and the skirt) and in the thread of the head. Also, compatibility problems between the paint applied by spraying and the product housed inside the tube may lead to marks in the area of the head. Additionally, spray paint may enter the tube trough its free end (i.e. the area of the tube opposite the head) if the tube is not perfectly adjusted to the support upon which the tube is positioned for spraying.

### Brief description of the invention

It is an object of the invention to provide a procedure for manufacturing flexible tubes provided with a skirt and preferably a head, in which the continuous tube extrusion process is integrated with the decorative spraying process, and both integrated operations are carried out prior to the process for cutting the continuous tube in order to obtain the skirt. After this extrusion and spraying process, other processes may be performed in order to obtain the final flexible tube, such as a manufacture of the head (generally by injection), the connection of a cap to the head, and other optional decorative processes. These other processes can be in-line or physically separated.

The spraying carried out in the extrusion and spraying process normally comprises various phases. In a first phase, surface treatments designed to prepare said surface to receive the decoration are supplied on the surface to be decorated (i.e. on the continuous tube that is being extruded). Some known surface treatments are the application of a flaming, a plasma or a crown. In a second phase, a sprayed liquid or powder paint is applied, followed by an optional drying. This sparying process can be repeated several times with the object of applying various sprayed layers of different materials to improve the appearance, compatibility, physical strength, etc. In a third phase, a sprayed varnish is applied. The spraying process ends with a final drying phase. These phases are not fixed and can be varied if need be.

In the extrusion and spraying process, the invention contemplates the use of sprayable decorative materials such as paints, sprays, or any other material in general that is capable of being sprayed to preferably achieve a suitable covering or decoration of the tube.

The integration of the spray process in the extrusion process itself presents certain advantages compared to performing the spraying after the extrusion and the cutting of the continuous tube (and normally subsequent to the manufacturing of the head). Firstly, it allows to obtain a continuous tube provided with a decorative richness that is not possible to achieve by adding colouring to the mix or material to be extruded. Secondly, it allows to obtain skirts which are already decorated at the end of the cutting process, therefore optimising costs, execution times (as there is no need for a process exclusively dedicated to spraying), planning operations, stocking of products between operations, etc. Furthermore, as the sprayed material is applied onto a continuous tube, the risk of the sprayed paint getting into the interior of the tube is eliminated. In addition, the problems relating to the head are eliminated as it is manufactured on the skirt once the skirt has been sprayed, therefore no spraying being applied to the head whatsoever. Finally, the integration of the extrusion and the spraying provides the additional advantage of it being possible to cover and even conceal certain typical finish defects that may appear on the continuous tube as a result of the extrusion process, such as extrusion lines, pores or flow lines.

The invention is applicable to the manufacture of both single-layer tubes (tubes of a single layer that are manufactured by a procedure of extrusion) and multi-layer tubes (tubes of more than one layer that are manufactured by a procedure of co-extrusion of various layers).

### Brief description of the drawings

Details of the invention can be seen in the accompanying non-limiting drawings:
- Figure 1 shows an embodiment of the inventive procedure for manufacturing a flexible tube provided with a skirt, head and cap.
- Figure 2 shows a procedure known in the prior art, for manufacturing a tube similar to that of Figure 1.

### Detailed description of the invention

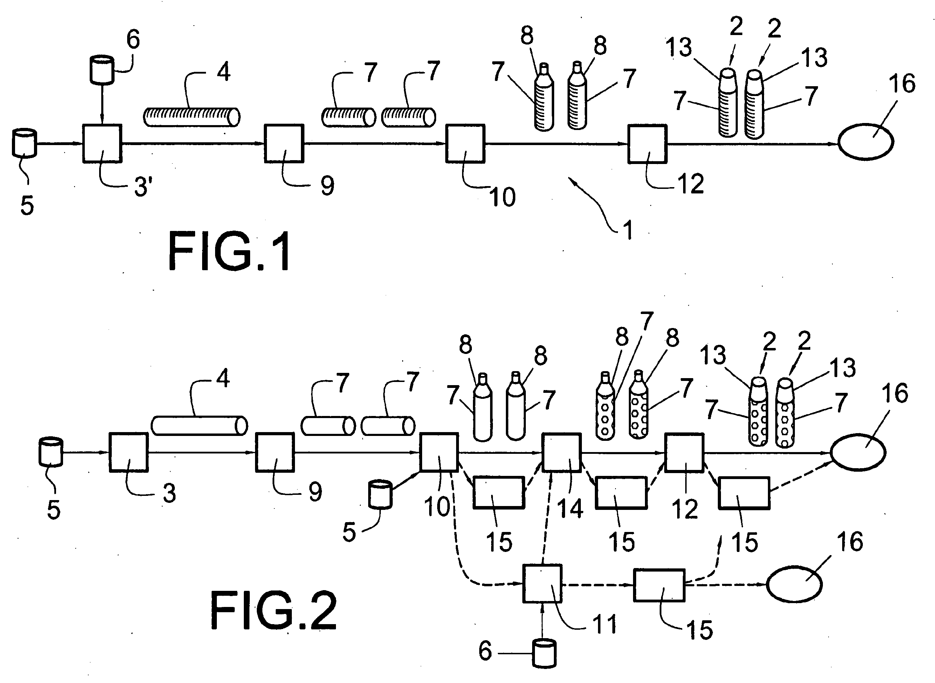

Figure 1 shows an embodiment of the procedure (1) according to the invention, for manufacturing a decorated tube (2) from at least one flexible material (5) and provided with a skirt (7), head (8) and cap (13). The inventive procedure (1) comprises the following processes:
- An extrusion and spraying process (3') for obtaining a extruded and decorated continuous tube (4), where said extrusion and spraying process (3') comprises an extrusion subprocess and a spray subprocess. In the first of them, the extrusion of at least one coloured or non-coloured material (5) is carried out through at least one extrusion nozzle, an extruded single-layer or multi-layer continuous tube (4) being obtained. Said subprocess of extrusion normally comprises a cooling and a calibration process performed at the outlet of the extrusion nozzle, to obtain an extruded continuous tube (4) of controlled characteristics (diameter, thickness, temperature, etc). The subprocess of spraying is substantially carried out at the exit of the subprocess of extrusion (the process of extrusion preferably comprising the necessary subprocesses to guarantee the physical characteristics of the extruded continuous tube (4): thickness, diameter, temperature, etc.), the extruded and decorated continuous tube (4) being obtained following the subprocess of spraying.
- A cutting process (9) of the decorated continuous tube (4) for obtaining the skirt (7) of the decorated tube (2).
- A transformation process (10) for the manufacture of a head (8) on the skirt (7). Said transformation process (10) may consist in overmoulding or injecting of the head (8) on the skirt (7).
- A capping process (12) for the connection of a cap (13) on the head (8).
- Once the in-line manufacturing has been completed, the supplementary decoration processes (in order to add other decorative elements such as texts and/or images) may be performed: silk-screen printing, offset printing, hot stamping, transfer printing and others. These supplementary decoration processes may also be performed in any of the intermediate steps of the in-line manufacturing, following the cutting process (9) and after the transformation process (10).

The process of spraying may comprise various subprocesses: the realisation of surface treatments, the application of liquid or powder paint and/or spray varnishes, the application of a drying, etc. The material (6) used in the spraying may be a single material or a mix of materials, and may contain spray paint, spray varnish, or others.

Figure 2 shows a procedure which is known in the prior art, for obtaining a tube similar to that of Figure 1. In this case the procedure comprises the following processes:
- A process of extrusion (3) in which a single or multi-layer continuous tube (4) is manufactured by the extrusion of at least one coloured or non-coloured material (5), a continuous tube (4) being obtained with aesthetic qualities limited to the aesthetic possibilities offered by the colouring of the material (5).
- A cutting process (9) of the continuous tube (4), in order to obtain the skirt (7) of the decorated tube (2).
- A transformation process (10) in order to manufacture the head (8) on the skirt (7). As in the inventive procedure (1), said transformation process (10) may consist in overmoulding or injecting of the head (8) on the skirt (7).
- Normally, at this stage of the procedure a decoration process (14) of the skirt (7) of the tube is performed, for example a process of offset printing.
- A capping process (12) in order to connect a cap (13) to the head (8).
- At practically any moment of the in-line manufacturing procedure there exists the possibility of performing, in the line itself or out of it, one or various supplementary decoration processes (15) such as silk-screen printing, hot stamping, transfer printing and others, for the purpose of providing the skirt (7) with other decorative elements (e.g., texts and/or images).
- The end (16) of the procedure is then reached, where the end product, i.e. the decorated tube (2), is obtained.

In case that the decorated tube (2) must be provided with a decoration by spraying during this conventional procedure, the common practice is to remove the tube composed of the skirt (7) and head (8) from the production line and perform a separate spraying process (11), which often takes place in an externalised manner, i.e. in another factory or facility. In said spraying process (11) a certain material (6) is sprayed on the attached skirt (7) and head (8) to provide the skirt (7) and head (8) with a decorative coating. After this process has been performed the tube with spray decoration may be returned to the line or may receive a supplementary decoration process (15) before then returning to the line or reaching the end (16) of the procedure.

As can be seen in the figures, in addition to other already detailed advantages, the integration of the spraying and the extrusion in a single process (3') enables the elimination of the spraying process (11) as such and the reduction of the total number of processes involved in the procedure (1), thereby reducing the total time it takes for the procedure (1) to be performed in relation to the conventional procedure. This is achieved by having the spraying and the extrusion carried out in parallel.

## Claims

1. Procedure (1) for manufacturing a flexible decorated tube (2), where the decorated tube (2) comprises a skirt (7), **characterised in that** it comprises the following processes:
- an extrusion and spraying process (3') for the obtention of a extruded and decorated continuous tube (4), where said extrusion and spraying process (3') comprises a subprocess of extrusion of at least one material (5) for the obtention of an extruded single-layer or multi-layer continuous tube (4) and a subprocess of spraying of at least one specific material (6) on the extruded continuous tube (4), said subprocess of spraying being substantially carried out at the exit of the subprocess of extrusion and the extruded and decorated continuous tube (4) being obtained after the subprocess of spraying,
- a cutting process (9) of the extruded and decorated continuous tube (4) for the obtention of the skirt (7) of the decorated tube (2).

2. Procedure (1) for manufacturing a flexible decorated tube (2), in accordance with claim 1, **characterised in that** it also comprises a transformation process (10) that manufactures a head (8) on the skirt (7).

3. Procedure (1) for manufacturing a flexible decorated tube (2), in accordance with claim 2, **characterised in that** it also comprises a capping process (12) for the connection of a cap (13) to the head (8).

4. Procedure (1) for manufacturing a flexible decorated tube (2), in accordance with claim 1, **characterised in that** it also comprises one or more supplementary processes of decoration for the purposes of adding to the tube texts, images and/or other decorative elements.

5. Procedure (1) for manufacturing a flexible decorated tube (2), in accordance with claim 1, **characterised in that** the spray material (6) comprises sprayable paint.

6. Procedure (1) for manufacturing a flexible decorated tube (2), in accordance with claim 1, **characterised in that** the spray material (6) comprises sprayable varnish.

7. Procedure (1) for manufacturing a flexible decorated tube (2), in accordance with claim 1, **characterised in that** the subprocess of spraying carried out in the extrusion and spraying process (3') comprises the application of surface treatments on the extruded continuous tube (4) prior to the spraying of the material (6).

8. Procedure (1) for manufacturing a flexible decorated tube (2), in accordance with claim 1, **characterised in that** the subprocess of spraying carried out in the extrusion and spraying process (3') comprises the application of a drying on the decorated continuous tube (4) after the spraying of the material (6).

9. Procedure (1) for manufacturing a flexible decorated tube (2), in accordance with claim 1, **characterised in that** the subprocess of spraying carried out in the extrusion and spraying process (3') comprises the realisation of necessary subprocesses to guarantee the physical characteristics of the extruded continuous tube (4).

## Patentansprüche

1. Verfahren (1) zur Herstellung eines flexiblen verzierten Schlauches (2), wobei der verzierte Schlauch (2) eine Einfassung (7) enthält und **dadurch gekennzeichnet ist, dass** er folgende Verfahren umfasst:
- ein Extrusions- und Sprühverfahren (3') für die Erzielung eines extrudierten und verzierten Schlauches (4), wobei besagtes Extrusions- und Sprühverfahren (3') ein Teilverfahren der Extrusion von mindestens einem Material (5) für die Erzielung eines extrudierten, einfach beschichteten oder mehrfach beschichteten durchgehenden Schlauches (4) und ein Teilverfahren des Sprühens von mindestens einem spezifischen Material (6) auf den extrudiereten durchgehenden Schlauch( 6) umfasst; wobei besagtes Teilverfahren des Sprühens im Wesentlichen an der Austrittsstelle des Teilverfahrens der Extrusion durchgeführt wird, und der extrudierte und verzierte durchgehende Schlauch (4) nach dem Teilverfahren des Sprühens erlangt wird.
- ein Verfahren des Schneidens (9) des extrudierten und verzierten durchgehenden Schlauches (4) für die Erzielung einer Umfassung (7) für den verzierten Schlauch (4).

2. Verfahren (1) zur Herstellung eines flexiblen verzierten Schlauches (2), in Übereinstimmung mit Anspruch 1, **dadurch gekennzeichnet, dass** es auch ein Umwandlungsverfahren (10) umfasst, bei dem ein Kopfstück (8) an der Einfassung (7) erzeugt wird.

3. Verfahren (1) zur Herstellung eines flexiblen verzierten Schlauches (2), in Übereinstimmung mit Anspruch 2, **dadurch gekennzeichnet, dass** es auch ein Abdeckungsverfahren (10) für die Verbindung einer Abdeckung (13) mit einem Kopfstück (8) umfasst.

4. Verfahren (1) zur Herstellung eines flexiblen verzierten Schlauches (2), in Übereinstimmung mit Anspruch 1, **dadurch gekennzeichnet, dass** es auch ein oder mehrere ergänzende Verfahren der Verzierung für die Zwecke der Hinzufügung von Text, Bildern und/oder dekorativen Elementen zu dem Schlauch umfasst.

5. Verfahren (1) zur Herstellung eines flexiblen verzierten Schlauches (2), in Übereinstimmung mit Anspruch 1, **dadurch gekennzeichnet, dass** das Sprühmaterial (6) sprühbare Farbe umfasst.

6. Verfahren (1) zur Herstellung eines flexiblen verzierten Schlauches (2), in Übereinstimmung mit Anspruch 1, **dadurch gekennzeichnet, dass** das Sprühmaterial (6) sprühbaren Lack umfasst.

7. Verfahren (1) zur Herstellung eines flexiblen verzierten Schlauches (2), in Übereinstimmung mit Anspruch 1, **dadurch gekennzeichnet, dass** das Teilverfahren des Sprühens, das während des Extrusions- und Sprühverfahrens (3') durchgeführt wird, die Anwendung von Oberflächenbehandlungen auf dem extrudierten durchgehenden Schlauch (4) vor dem Sprühen des Materials (6) umfasst.

8. Verfahren (1) zur Herstellung eines flexiblen verzierten Schlauches (2), in Übereinstimmung mit Anspruch 1, **dadurch gekennzeichnet, dass** das Teilverfahren des Sprühens, das während des Extrusions- und Sprühverfahrens (3') durchgeführt wird, einen Prozess des Trocknens auf dem verzierten durchgehenden Schlauch (4) nach dem Sprühen des Materials (6) umfasst.

9. Verfahren (1) zur Herstellung eines flexiblen verzierten Schlauches (2), in Übereinstimmung mit Anspruch 1, **dadurch gekennzeichnet, dass** das Teilverfahren des Sprühens, das während des Extrusions- und Sprühverfahrens (3') durchgeführt wird, die Durchführung von erforderlichen Teilverfahren zur Gewährleistung der physischen Merkmale des extrudierten durchgehenden Schlauches (4) umfasst.

## Revendications

1. Processus (1) de fabrication d'un tube décoré flexible (2) où le tube décoré (2) comprend une jupe (7) **caractérisé par le fait qu'**il comprend les processus suivants :
- un processus d'extrusion et de pulvérisation (3') pour l'obtention d'un tube continu extrudé et décoré (4), où ce processus d'extrusion et de pulvérisation (3') comprend un sous-processus d'extrusion d'au moins un matériau (5) pour l'obtention d'un tube continu extrudé à une couche ou plusieurs couches (4) et un sous-processus de pulvérisation d'au moins un matériau spécifique (6) sur le tube extrudé continu (4), ce sous-processus de pulvérisation étant substantiellement réalisé en sortie du sous-processus d'extrusion et le tube continu extrudé et décoré (4) étant obtenu après le sous-processus de pulvérisation,
- un processus de coupe (9) du tube continu extrudé et décoré (4) pour l'obtention de la jupe (7) du tube décoré (2).

2. Processus (1) de fabrication d'un tube décoré flexible (2), conformément à la revendication 1, **caractérisé par le fait qu'**il comprend également un processus de transformation (10) qui fabrique une tête (8) sur la jupe (7).

3. Processus (1) de fabrication d'un tube décoré flexible (2) conformément à la revendication 2, **caractérisé par le fait qu'**il comprend également un processus de capsulage (12) pour connecter un bouchon (13) sur la tête (8).

4. Processus (1) de fabrication d'un tube décoré flexible (2), conformément à la revendication 1, **caractérisé par le fait qu'**il comprend également un ou plusieurs processus supplémentaires de décoration afin d'ajouter sur le tube des textes, des images et/ou d'autres éléments décoratifs.

5. Processus (1) de fabrication d'un tube décoré flexible (2), conformément à la revendication 1, **caractérisé par le fait que** le matériau de pulvérisation (6) comprend de la peinture pulvérisable.

6. Processus (1) de fabrication d'un tube décoré flexible (2) conformément à la revendication 1, **caractérisé par le fait que** le matériau de pulvérisation (6) comprend du vernis pulvérisable.

7. Processus (1) de fabrication d'un tube décoré flexible (2) conformément à la revendication 1, **caractérisé par le fait que** le sous-processus de pulvérisation réalisés pendant le processus d'extrusion et de pulvérisation (3') comprend l'application de surfaces de traitement sur le tube continu extrudé (4) avant la pulvérisation du matériau (6).

8. Processus (1) de fabrication d'un tube décoré flexible (2) conformément à la revendication 1, **caractérisé par le fait que** le sous-processus de pulvérisation réalisé pendant le processus d'extrusion et de pulvérisation (3') comprend l'application d'un séchage sur le tube continu décoré (4) après la pulvérisation du matériau (6).

9. Procédure (1) de fabrication d'un tube décoré flexible (2) conformément à la revendication 1, **caractérisé par le fait que** le sous-processus de pulvérisation réalisé pendant le processus d'extrusion et de pulvérisation (3') comprend la réalisation des sous-processus nécessaires pour garantir les caractéristiques physiques du tube continu extrudé (4).
